# EUROPEAN PATENT SPECIFICATION

(11) **EP 1 191 713 B1**
(45) Date of publication and mention of the grant of the patent: **28.07.2004**
(21) Application number: 01930228.0
(22) Date of filing: 21.05.2001
(51) Int. Cl.: H04B 7/26, H04L 25/06, H04L 25/02

(54) **COMMUNICATION TERMINAL APPARATUS AND DEMODULATION METHOD**
KOMMUNIKATIONSENDGERÄT UND DEMODULATIONSVERFAHREN
TERMINAL DE COMMUNICATION ET PROCEDE DE DEMODULATION

(30) Priority: 19.05.2000 JP 2000149109
(43) Date of publication of application: 27.03.2002
(73) Proprietor: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2001/004216
(87) International publication number: WO 2001/089115

(56) References cited:
- JP-A- 5 304 544
- JP-A- 2000 013 353
- US-A- 5 872 775
- ANDREW J. VITERBI: "Principles of Spread Spectrum Communication (pages 84-92)" April 1995 (1995-04) , ADDISON WESLEY , READING, MASSACHUSETTS XP002235877 * figures 4.2,4.3A,4.3B * * page 88 *
- CAVERS J K: "AN ANALYSIS OF PILOT SYMBOL ASSISTED MODULATION FOR RAYLEIGH FADING CHANNELS" IEEE TRANSACTIONS ON VEHICULAR TECHNOLOGY, IEEE INC. NEW YORK, US, vol. 40, no. 4, 1 November 1991 (1991-11-01), pages 686-693, XP000278280 ISSN: 0018-9545
- ABETA S ET AL: "ADAPTIVE CHANNEL ESTIMATION FOR COHERENT DS-CDMA MOBILE RADIO USINGTIME-MULTIPLEXED PILOT AND PARALLEL PILOT STRUCTURES" IEICE TRANSACTIONS ON COMMUNICATIONS, INSTITUTE OF ELECTRONICS INFORMATION AND COMM. ENG. TOKYO, JP, vol. E.82.B, no. 9, September 1999 (1999-09), pages 1505-1513, XP000904922 ISSN: 0916-8516
- ALMUTAIRI A F ET AL: "PERFORMANCE OF MULTI-LEVEL MODULATION IN MMSE RECEIVER BASED CDMA SYSTEMS" MILCOM 1999. IEEE MILITARY COMMUNICATIONS CONFERENCE PROCEEDINGS. ATLANTIC CITY, NJ, OCT. 31 - NOV. 3, 1999, IEEE MILITARY COMMUNICATIONS CONFERENCE, NEW YORK, NY: IEEE, US, vol. VOL 1 OF 2 CONF. 18, 31 October 1999 (1999-10-31), pages 398-402, XP000921957 ISBN: 0-7803-5539-3

## Description

### Technical Field

The present invention relates to a communication terminal apparatus that performs M-ary quadrature amplitude modulation and a demodulation method that performs demodulation of a radio signal that has been M-ary quadrature amplitude modulated.

### Background Art

Recently, amplitude modulation that provides information in amplitude, such as M-ary Quadrature Amplitude Modulation (M-ary QAM), has been implemented as a digital radio communication modulation method that responds to growing communication needs. M-ary QAM enables numerous bits to be transmitted in one symbol, and gives improved spectral efficiency per band, making it a suitable modulation method for terrestrial mobile communications in which the spectrum is limited. For example, with 16QAM, 4 bits of information can be transmitted per symbol. Hereinafter, descriptions will use 16QAM as a representative example of amplitude modulation.

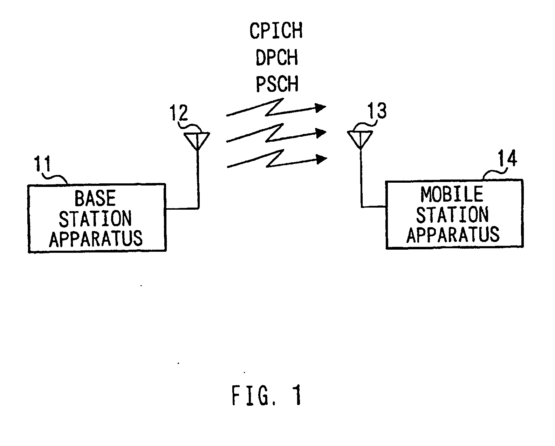

FIG.1 is a configuration diagram of a conventional radio transmission apparatus that performs radio transmission of QAM modulated data. As shown in this diagram, QAM modulated transmit data and control signals are transmitted by a base station apparatus 11 via an antenna 12. Transmit data from the base station apparatus 11 is received by a mobile station apparatus 14 via an antenna 13, after which it undergoes predetermined QAM demodulation.

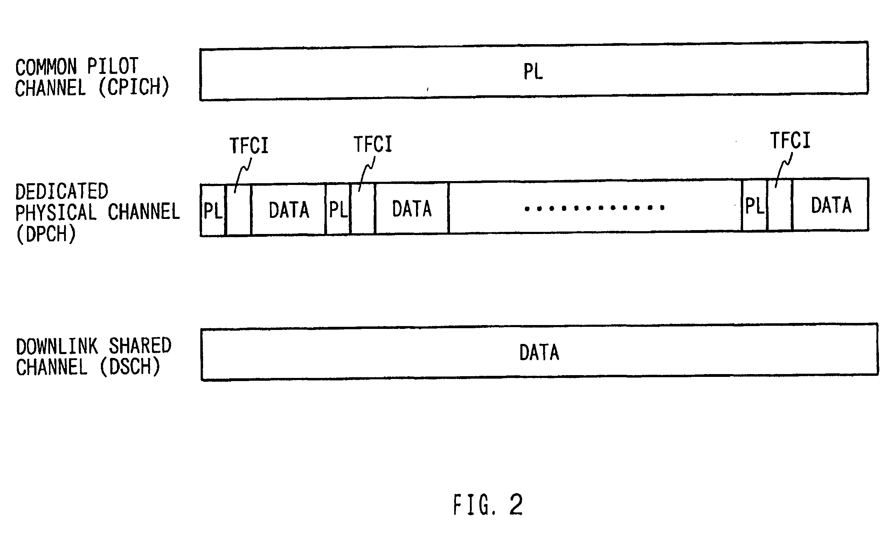

FIG.2 is a drawing explaining channel assignment of a signal transmitted from the base station apparatus 11. Transmit data and control signals are transmitted using a Common PIlot CHannel (CPICH), Dedicated Physical CHannel (DPCH), and Downlink Shared CHannel (DSCH) shown in this drawing, and the like.

A CPICH is a channel for transmitting a common known signal (common pilot) to mobile stations. A DPCH is a channel for transmitting data, a dedicated known signal (dedicated pilot) for each mobile station apparatus, and a TFCI (Transmit Format Combination Indicator). A TFCI is a signal for reporting the DSCH transmission format (transmission rate, etc.) to the receiving side. A DSCH is a channel for transmitting QAM modulated data to mobile station apparatuses by time division, and the mobile station apparatus being transmitted to can be changed every frame.

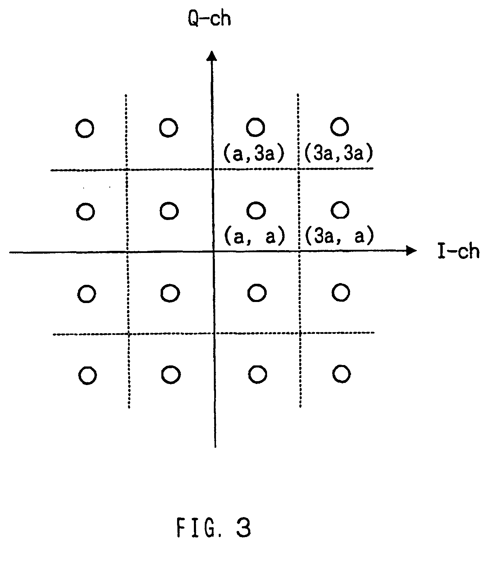

QAM demodulation in the mobile station apparatus 14 will now be described in detail with reference to FIG. 3. FIG.3 is a 16QAM signal space representation. As determination of 16 values is performed in 16QAM, 16 signal points P1 to P16 are arranged in the I-Q plane as shown in this diagram. For these signal points, phase is determined based on a common pilot transmitted from the base station apparatus, and amplitude is determined based on a dedicated pilot. In the signal space representation, straight lines for which the distances from a signal point and the signal point nearest that signal point are exactly equal are set as threshold values. For example, a straight line for which the distances from P1 (3a, 3a) and its nearest point P2 (a, 3a) are exactly equal is straight line L parallel to the Q axis and passing through the midpoint (2a, 3a) of P1 and P2. In this case, straight line L is set as a threshold value. Threshold values are set in the same way for the other points, so that the threshold values shown in FIG.3 are set.

In QAM demodulation, receive data received by a mobile station is arranged on this signal space representation, the nearest signal point to the receive data is found by making a threshold decision with threshold values set as described above, and information corresponding to the signal point found in this way is taken as demodulated data. As there are 16 signal point values, demodulated data is 4-bit data. That is to say, 4-bit data (0, 0,0, 0), (0, 0, 0, 1) through (1, 1, 1, 1) are assigned to P1 through P16.

As stated above, signal points are arranged based on the amount of phase rotation of a common pilot and amplitude fluctuations of a dedicated pilot. However, in order to suppress interference with other stations, a DPCH containing a dedicated pilot is transmitted at weaker power than a CPICH containing a common pilot, and there is consequently a problem in that a dedicated pilot is susceptible to noise, and signal points in the signal space representation include a large degree of error in the amplitude direction, making it impossible to perform QAM demodulation with high precision.

Also, as a DSCH does not include a known signal for estimating a propagation path, there is a problem of not 10 being able to determine threshold values by means of a DSCH which is transmitted at higher power than a DPCH.

"Principles of Spread Spectrum Communication" (Andrew J. Viterbi, Addison Wesley, Reading, Massachusetts, XP002235877, April 1995, pages 84-92) teaches the modulation and demodulation of spread spectrum signals, especially the signal structure and exploitation of multipath propagation. Here an estimated channel coefficient is divided by the additional gain allotted to the pilot signal.

"An Analysis of Pilot Symbol Assisted Modulation for Rayleigh Fading Channels" (J. K. Cavers, IEEE Transactions on Vehicular Technology, IEEE Inc. New York, US, vol. 40, no. 4, 1-11-1991, pages 686-693, XP000278280 ISSN: 0018-9545) provides an analysis of pilot symbol assisted modulation. It is disclosed to scale and rotate the decision boundaries using the channel estimate.

### Disclosure of Invention

It is an object of the present invention to provide a mobile station apparatus, a base station apparatus and a demodulation method that enable signal points to be arranged accurately and QAM demodulation to be performed with high precision.

This object is achieved by the invention as claimed in the independent claims.

### Brief Description of Drawings

FIG.1 is a block diagram showing a configuration of a conventional radio transmission apparatus;
FIG.2 is a drawing explaining channel assignment of a signal transmitted from a conventional base station apparatus;
FIG.3 is a 16QAM signal space representation;
FIG.4 is a block diagram showing the configuration of a radio transmission apparatus according to Embodiment 1 of the present invention;
FIG.5 is a drawing explaining channel assignment of a signal transmitted from a base station apparatus according to Embodiment 1 of the present invention;
FIG.6 is a block diagram showing the configuration of a DSCH demodulation section according to Embodiment 1 of the present invention;
FIG.7 is a drawing explaining the arrangement of 16QAM signal points;
FIG.8 is a drawing explaining the arrangement of 16QAM signal points; and
FIG.9 is a block diagram showing the configuration of a radio transmission apparatus according to Embodiment 2 of the present invention.

### Best Mode for Carrying out the Invention

With reference now to the accompanying drawings, embodiments of the present invention will be explained in detail below.

### (Embodiment 1)

In this embodiment, a base station apparatus notifies information indicating the ratio of the transmission power of a predetermined common pilot to the transmission power of a DSCH predetermined signal to be QAM modulated (power ratio information) to a mobile station apparatus, and based on this power ratio information the mobile station apparatus arranges signal points accurately and performs QAM demodulation with high precision.

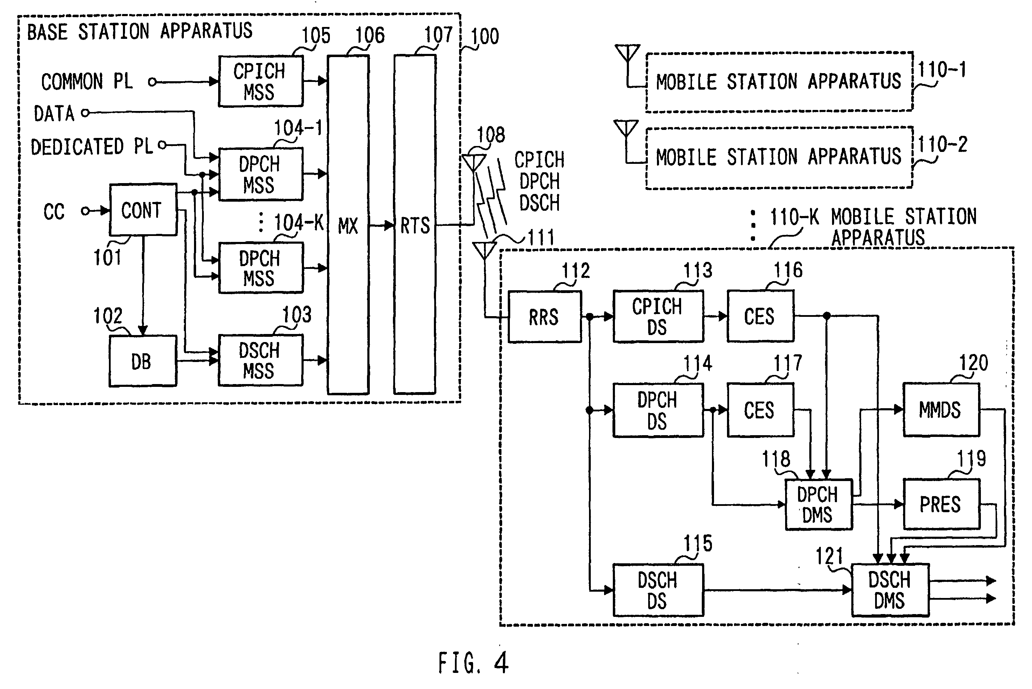

FIG.4 is a block diagram showing the configuration of a radio transmission apparatus according to Embodiment 1 of the present invention. As shown in this diagram, a radio transmission apparatus according to this embodiment comprises a base station apparatus 100 and mobile station apparatuses 110-1 through 110-K. The base station apparatus 100 transmits data and control signals to mobile station apparatuses 110-1 through 110-K. Mobile station apparatuses 110-1 through 110-K receive a signal from the base station apparatus 100 and demodulate it using a predetermined method.

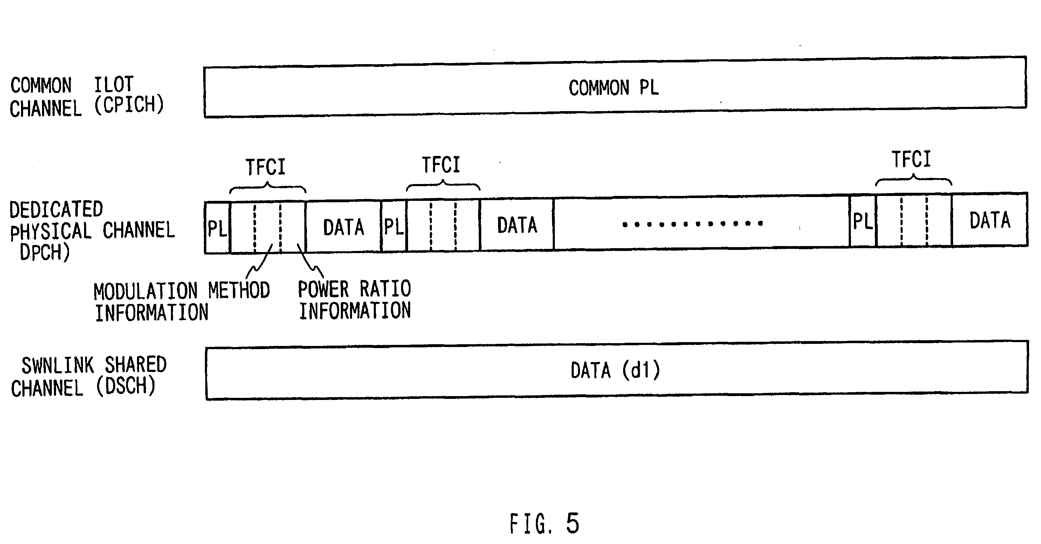

FIG.5 is a drawing explaining channel assignment of a signal transmitted from a base station apparatus according to Embodiment 1 of the present invention. Transmit data and control signals are transmitted using the Common PIlot CHannel (CPICH), Dedicated Physical CHannel (DPCH), and Downlink Shared CHannel (DSCH) shown in this drawing, and the like.

The CPICH is a channel for transmitting a common known signal (common pilot) to mobile station apparatuses 110-1 through 110-K. This common pilot is received by each of mobile station apparatuses 110-1 through 110-K and used for channel estimation, etc.

The DPCH is a channel for transmitting data, a dedicated known signal (dedicated pilot) for each mobile station apparatus, and a TFCI (Transmit Format Combination Indicator). A dedicated pilot is received by the corresponding mobile station apparatus 110-1 through 110-K and used for channel estimation, etc. The TFCI is a signal for reporting the DSCH transmission format to the receiving side, and in this embodiment, a signal indicating the modulation method and power ratio information, in particular, are set in this TFCI. Power ratio information is information indicating the ratio of the transmission power of a predetermined common pilot to the transmission power of a DSCH to be QAM modulated, and is received by a corresponding mobile station apparatus 110-1 through 110-K and used to arrange signal points.

The DSCH is a channel for transmitting QAM modulated data to a designated mobile station apparatus, and does not have a known signal. With this DSCH, the mobile station apparatus being transmitted to can be changed every frame.

The configuration of a radio transmission apparatus according to Embodiment 1 of the present invention will now be described with reference to FIG.4 again. The base station apparatus 100 comprises a controller (CONT) 101, a data buffer (DB) 102, a DSCH modulation/spreading section (DSCH MSS)103, DPCH modulation/spreading sections (DPCH MSS) 104-1 through 104-K, a CPICH modulation/spreading section (CPICH MSS) 105,a multiplexer (MX) 106, a radio transmitting section (RTS)107, and an antenna 108. Mobile station apparatus 110-K comprises an antenna 111, a radio receiving section (RRS) 112, a CPICH despreading section (CPICH DS) 113, a DPCH despreading section (DPCH DS) 114, a DSCH despreading section (DSCH DS) 115, channel estimation sections (CES) 116 and 117, a DPCH demodulation section (DPCH DMS) 118, a power ratio extraction section (PRES) 119, a modulation method determination section (MMDS) 120, and a DSCH demodulation section (DSCH DMS) 121.

In the base station apparatus 100, the controller 101 selects mobile station apparatus 110-K as the mobile station apparatus to to which a signal is transmitted using the DSCH. In addition, the modulation method of the DSCH modulation/spreading section 103 is decided by referring to the channel condition estimation result. For example, when channel conditions are good, 64QAM, 16QAM, or similar modulation is performed in order to increase the transmission rate. Conversely, when channel conditions are poor, QPSK, BPSK, or similar modulation is performed in order to decrease the transmission rate. A signal indicating the decided transmission rate is output to the data buffer 102, DSCH modulation/spreading section 103, and DPCH modulation/spreading section 104-K. The data buffer 102 temporarily holds data d1 to be transmitted to mobile station apparatus 110-K, and outputs the held data d1 to the DSCH modulation/spreading section 103 in accordance with control by the controller 101. The DSCH modulation/spreading section 103 performs QAM modulation or phase modulation in accordance with control by the controller 101 on data d1 output from the data buffer 102, spreads the modulated signal using spreading code #K specific to mobile station apparatus 110-K to be transmitted to, and outputs the resulting signal to the multiplexer 106.

In addition, the controller 101 calculates power ratio information and outputs it to DPCH modulation/spreading section 104-K. DPCH modulation/spreading section 104-K sets the signal indicating the modulation method and power ratio information from the controller 101 in the TFCI, and composes a frame with this TFCI, a dedicated pilot, and data. Power ratio information is information indicating the ratio of the transmission power of a predetermined common pilot to the transmission power of a DSCH predetermined signal to be QAM modulated. The framed signal is modulated using a predetermined modulation method, and is then spread using spreading code #K specific to mobile station apparatus 110-K, and the spread signal is output to the multiplexer 106.

DPCH modulation/spreading sections 104-1 through 104-K are provided corresponding to mobile station apparatuses 110-1 through 110-K. Each of DPCH modulation/spreading sections 104-1 through 104-(K-1) composes a frame with a dedicated pilot, TFCI, and data to be transmitted to corresponding mobile station apparatus 110-1 through 110-(K-1), and modulates the framed signal using a predetermined modulation method. The modulated signal is then multiplied by the spreading code specific to the corresponding mobile station, and output to the multiplexer 106.

The CPICH modulation/spreading section 105 modulates a common pilot to be transmitted on the CPICH using a predetermined modulation method, multiplies the modulated common pilot by a spreading code common to all mobile station apparatuses 110-1 through 110-K, and outputs the resulting signal to the multiplexer 106.

The multiplexer 106 multiplexes the spread signals output from the DSCH modulation/spreading section 103, DPCH modulation/spreading sections 104-1 through 104-K, and CPICH modulation/spreading section 105, and outputs the resulting signal to the radio transmitting section 107. The radio transmitting section 107 performs predetermined radio transmission processing (such as up-conversion) on the multiplexed transmit signal from the multiplexer 106, and performs radio transmission to mobile station apparatuses 110-1 through 110-K via antenna 108.

Next, the configuration of mobile station apparatus 110-K will be described.

In mobile station apparatus 110-K, the radio receiving section 112 performs predetermined radio reception processing (such as down-conversion) on a received signal received via the antenna 111. In addition, signals on which radio reception processing has been carried out are separated by channel, and output to the CPICH despreading section 113, DPCH despreading section 114, and DSCH despreading section 115. That is to say, a signal transmitted using the CPICH is output to the CPICH despreading section 113, a signal transmitted using the DPCH is output to the DPCH despreading section 114, and a signal transmitted using the DSCH is output to the DSCH despreading section 115.

The CPICH despreading section 113 despreads the output (common pilot) from the radio receiving section 112 by means of a predetermined spreading code, and outputs the despread signal to channel estimation section 116. The DPCH despreading section 114 despreads the output (dedicated pilot, TFCI, and data) from the radio receiving section 112 with spreading code #K, and outputs the despread signal to channel estimation section 117 and the DPCH demodulation section 118. The DSCH despreading section 115 despreads output (data d1) from the radio receiving section 112 with spreading code #K, and outputs the despread signal to the DSCH demodulation section 121.

Channel estimation section 116 performs channel estimation using the despread common pilot from the CPICH despreading section 113, and calculates channel estimates (amplitude fluctuation and phase rotation amount). The calculated channel estimates are then output to the DPCH demodulation section 118 and DSCH demodulation section 121. Channel estimation section 117 performs channel estimation using the despread dedicated pilot from the DPCH despreading section 114, and calculates channel estimates (amplitude fluctuation and phase rotation amount). Of the calculated channel estimates, the amplitude fluctuation is then output to the DPCH demodulation section 118. The DPCH demodulation section 118 performs predetermined demodulation processing such as QPSK based on the channel estimates from channel estimation section 116 and the amplitude fluctuation from channel estimation section 117, and obtains demodulated data. This demodulated data is sent to the power ratio extraction section 119 and modulation method determination section 120. The power ratio extraction section 119 extracts power ratio information from the TFCI of the demodulated data from the DPCH demodulation section 118, and outputs the extracted power ratio information to the DSCH demodulation section 121. The modulation method determination section 120 refers to the TFCI of the demodulated data output from the DPCH demodulation section 118 and determines the modulation method in the DSCH modulation/spreading section 103, and outputs a signal indicating the result of the determination to the DSCH demodulation section 121.

Based on the channel estimates from channel estimation section 116, power ratio information from the power ratio extraction section 119, and the signal indicating the modulation method from the modulation method determination section 120, the DSCH demodulation section 121 switches the modulation method, performs predetermined demodulation processing on data d1 output from the DSCH, and obtains demodulated data.

Next, the operation of mobile station apparatus 110-K with the above configuration will be described.

A multiplex signal framed as shown in FIG.5 from the base station apparatus 100 is received as a radio signal via the antenna 111 of mobile station apparatus 110-K, and is then despread by channel. A common pilot transmitted using the CPICH is despread by the CPICH despreading section 113 and then undergoes channel estimation in channel estimation section 116, and channel estimates are output to the DPCH demodulation section 118 and DSCH demodulation section 121. A dedicated pilot transmitted via the DPCH is despread by the DPCH despreading section 114 and then undergoes channel estimation in channel estimation section 117, and amplitude fluctuation is output to the DPCH demodulation section 118. In the DPCH demodulation section 118, the data and TFCI transmitted using the DPCH are demodulated by means of a predetermined modulation method, and demodulated data is obtained. TFCI demodulated data is sent to the power ratio extraction section 119 and modulation method determination section 120. In the power ratio extraction section 119, power ratio information is extracted from the TFCI demodulated data and the extracted power ratio information is output to the DSCH demodulation section 121. In the modulation method determination section 120, the TFCI demodulated data is referenced and the modulation method in the DSCH modulation/spreading section 103 is determined, and a signal indicating the result of the determination is output to the DSCH demodulation section 121.

Data d1 transmitted using the DSCH is despread by the DSCH despreading section 115, and is then output to the DSCH demodulation section 121. In the DSCH demodulation section 121, data d1 despread by the DSCH demodulation section is demodulated based on the channel estimates from channel estimation section 116, power ratio information from the power ratio extraction section 119, and the signal indicating the modulation method from the modulation method determination section 120.

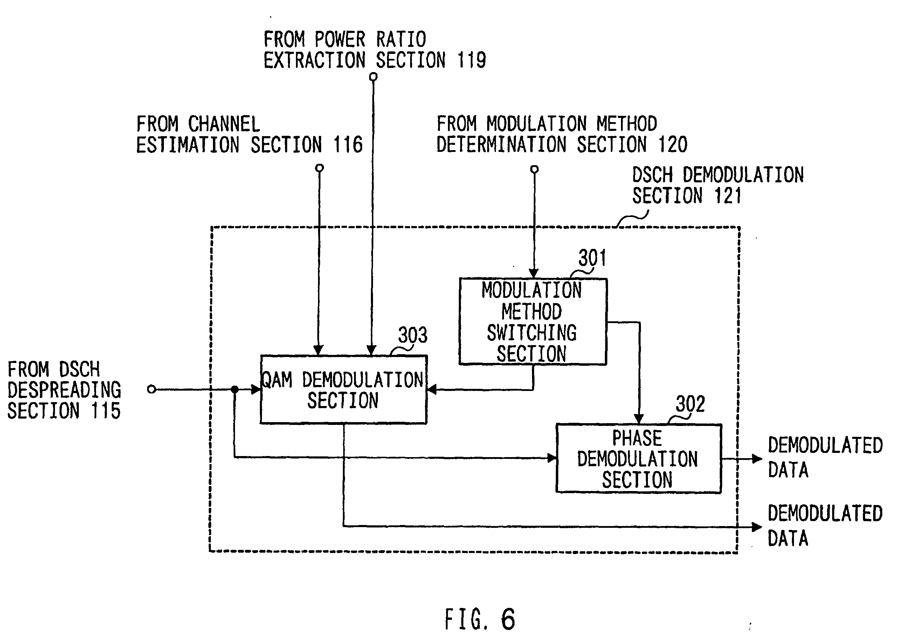

Demodulation processing by the DSCH demodulation section 121 will now be described in detail with reference to FIG.6. FIG.6 is a block diagram showing the configuration of the DSCH demodulation section 121. As shown in this diagram, the DSCH demodulation section 121 comprises a modulation method switching section 301, phase demodulation section 302, and QAM demodulation section 303.

In the modulation method switching section 301, switching between a phase modulation method and QAM modulation method is controlled based on a signal indicating the determination result from the modulation method determination section 120. When a switch is made to a phase modulation method, a signal to that effect is output to the phase demodulation section 302, and in the phase demodulation section 302 data d1 from the DSCH despreading section 115 undergoes phase demodulation such as QPSK or BPSK. On the other hand, when a switch is made to a QAM demodulation method, a signal to that effect is output to the QAM demodulation section 303. In this case, data d1 from the DSCH despreading section 115 is QAM demodulated in the QAM demodulation section 303 in accordance with channel estimates from channel estimation section 116 and power ratio information from the power ratio extraction section 119, and demodulated data is obtained.

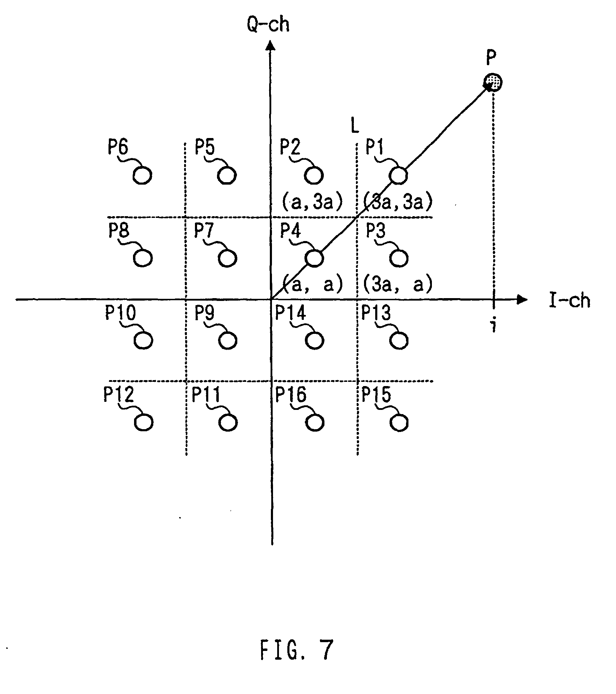

Next, QAM demodulation in a mobile station apparatus according to this embodiment will be described with reference to FIG.7. FIG.7 is a drawing explaining the arrangement of 16QAM signal points. As shown in this drawing, 16 signal points P1 through P16 are arranged in the I-Q plane. The arrangement of 16QAM signal points P1 through P16 will be described below with reference to FIG.7. As an example, a case will be described in which information indicating the ratio of the transmission power of a common pilot indicating point P shown in FIG.7 to the transmission power of a DSCH signal indicating signal point P1 shown in FIG.7 is transmitted from the base station apparatus 100 as power ratio information.

As signal points are arranged with P1, placed on the basis of a common pilot and power ratio information, as a reference, the placement of P1 will first be explained.

In order to place P1 shown in FIG.7, the phase and amplitude of P1 are determined. The phase of P1 is the same as that of the common pilot. The common pilot is placed at point P in the I-Q plane with the channel estimated phase rotation amount compensated for, and the phase of P1 is determined with reference to the phase of point P. For the amplitude of P1, the point P amplitude (distance from the origin) is multiplied by power ratio information, and the result is taken as the amplitude of P1. P1 (3a, 3a) is then placed based on the phase and amplitude determined in this way.

Next, P2 through P16 are determined based on P1. P2 has the same Q coordinate as P1, and the I coordinate is placed at a point (a, 3a) such that P1:P2 = 3:1. P3 has the same I coordinate as P1, and the Q coordinate is placed at a point (3a, a) such that P1:P3 = 3:1. Thereafter, placement continues in the same way until the 16 signal points shown in FIG.7 have been arranged.

Straight lines for which the distances from a signal point and the signal point nearest that signal point are exactly equal are set as threshold values. For example, a straight line for which the distances from P1 (3a, 3a) and its nearest point P2 (a, 3a) are exactly equal is straight line L parallel to the Q axis and passing through the midpoint (2a, 3a) of P1 and P2. In this case, straight line L is set as a threshold value. Threshold values are set for the other points in the same way.

Thus, in this embodiment, the amplitude of a signal point is calculated by multiplying the amplitude of a common pilot with large power by power ratio information transmitted from the base station apparatus. Therefore, signal points can be arranged with effects of noise held to a low level compared with heretofore.

In QAM demodulation, received data received by a mobile station is arranged in a signal space representation set as described above, and the nearest signal point to the received data is found by making a threshold decision with set threshold values. Information corresponding to the signal point found in this way is taken as demodulated data.

Thus, in this embodiment, since signal points are arranged based on power ratio information and a common pilot included in a signal transmitted from the base station apparatus, signal points can be arranged accurately with effects of noise, etc., held to a low level. And as received data determination is carried out based on accurate signal points arranged in this way, QAM demodulation can be performed with high precision.

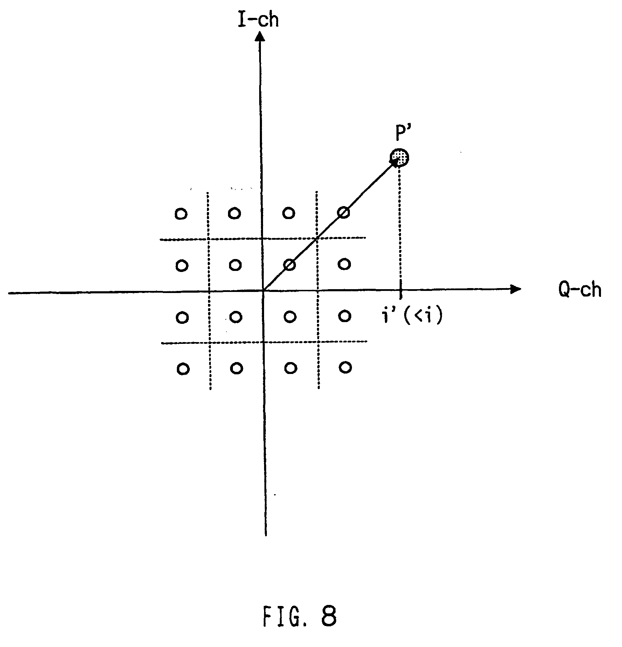

FIG.8 is a signal space representation for a case of reception with a small common pilot amplitude. As shown in this diagram, the amplitude of the common pilot varies and it is placed at P'. The amplitude of this point P' is multiplied by power ratio information to determine the amplitude of P1', and P1' is placed based on the amplitude determined in this way. Other signal points are arranged as shown in FIG.8 with reference to P1'. In this way, when fading that affects a received signal according to changes in channel conditions varies, signal points can be arranged appropriately according to that fading. Therefore, signal points can be arranged accurately and QAM modulation performed with high precision even when channel conditions change.

In this embodiment, the amplitude of P1 is determined by multiplying power ratio information by the amplitude of point P at which a common pilot is placed, but it is also possible to divide the amplitude of point P at which a common pilot is placed by power ratio information according to the method of calculating the power ratio information.

Also, in this embodiment, only the case where the DSCH is used for transmission to mobile station apparatus 110-K has been described, but use for transmission to other mobile station apparatuses is also possible.

Furthermore, in this embodiment, only the case has been described where power ratio information is taken as the ratio of the transmission power of a common known signal to the transmission power of a siqnal included in a channel that does not have a known signal, but the present invention is not limited to the above case, and the ratio of the transmission power of a common known signal to the transmission power of another known signal may also be used.

Moreover, in this embodiment, only the case has been described where information indicating the ratio of the transmission power of a common pilot indicating point P shown in FIG.7 to the transmission power of a DSCH signal indicating signal point P1 shown in the same FIG.7 is transmitted from the base station apparatus 100 as power ratio information, but this is not a limitation, and, in calculating power ratio information, it is possible for a predetermined common pilot to change as appropriate according to the modulation method, and it is possible for a predetermined DSCH to change as appropriate according to the common pilot.

### (Embodiment 2)

In this embodiment, QAM modulation is performed with high precision by calculating the ratio of the average value of common pilot reception power to the average value of reception power of a predetermined signal included in a DSCH (average power ratio) on the mobile station apparatus side, and determining the signal space representation based on this average power ratio.

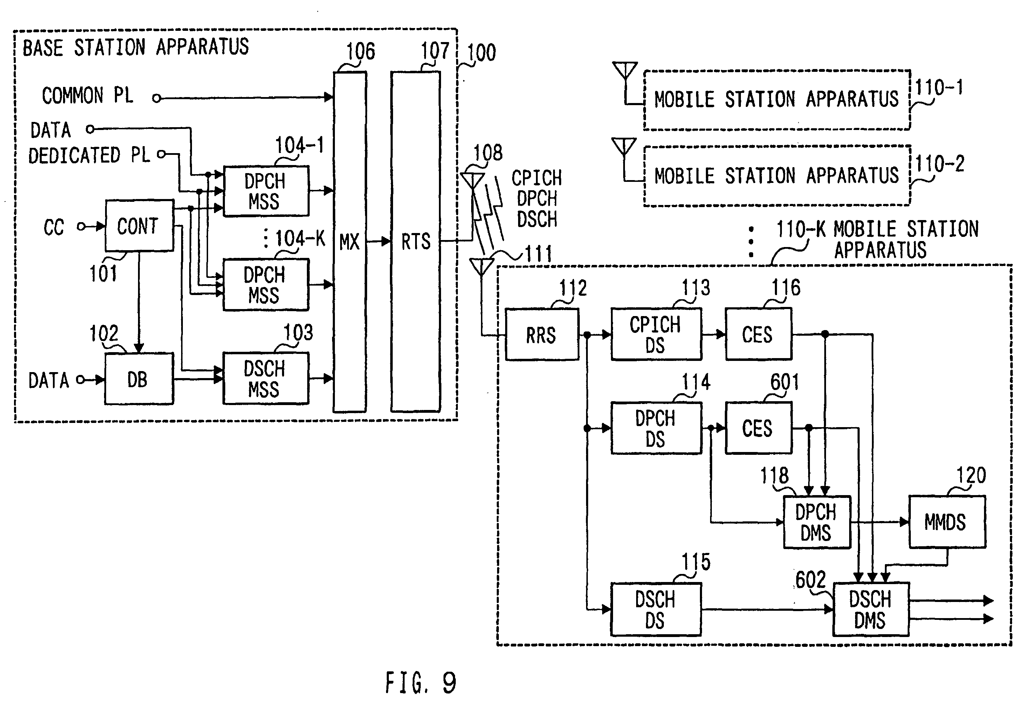

FIG.9 is a block diagram showing the configuration of a radio transmission apparatus according to Embodiment 2 of the present invention. As shown in this diagram, in the configuration of a transmitting apparatus according to this embodiment, the power ratio extraction section 119 of the transmitting apparatus shown in FIG.4 is omitted, the channel estimation section (CES) 117 is replaced by a channel estimation section (CES) 601, and the DSCH demodulation section (DSCH DMS) 121 is replaced by a DSCH demodulation section (DSCH DMS) 602. Parts in FIG.9 identical to those in FIG.4 are assigned the same codes as in FIG.4 and their detailed explanations are omitted.

The channel estimation section 601 performs channel estimation using a dedicated pilot despread by the DPCH despreading section 114, and calculates channel estimates (amplitude fluctuation and phase rotation amount). Of the calculated channel estimates, the amplitude fluctuation is then output to the DPCH demodulation section 118 and the DSCH demodulation section 602.

Based on the channel estimates from channel estimation section 116, amplitude fluctuation from channel estimation section 601, and the signal indicating the modulation method from the modulation method determination section 120, the DSCH demodulation section 602 switches the modulation method, performs predetermined demodulation processing on data d1 output from the DSCH despreading section 115, and obtains demodulated data.

The DSCH demodulation section 602 switches the demodulation method based on the signal indicating the modulation method from the modulation method determination section 120. When, as a result of this switch, QAM demodulation is performed, the average value for one slot of the reception power of a predetermined signal included in the QAM modulated DSCH is calculated based on the amplitude fluctuation from channel estimation section 601. Then the ratio of the calculated reception power average value to the common pilot reception power calculated based on the channel estimates from channel estimation section 116 is calculated, and this is taken as the average power ratio. Signal points are arranged based on the average power ratio calculated in this way and the channel estimates from channel estimation section 116, and QAM demodulation is carried out by making threshold decisions based on the arranged signal points. As regards calculation of the average value of dedicated pilot reception power, an average value may be calculated for another time interval rather than every slot.

The arrangement of signal points according to this embodiment will now be described with reference to FIG.7 again. In this embodiment, the amplitude of point P is not multiplied by power ratio information as in Embodiment 1, and the amplitude of P1 is determined by multiplying the amplitude of point P by the above-described average power ratio.

In order to place P1 shown in FIG.7, the phase and amplitude of P1 are determined. The phase of P1 is the same as that of the common pilot. The common pilot is placed at point P in the I-Q plane with the channel estimated phase rotation amount compensated for, and the phase of P1 is determined with reference to the phase of point P. For the amplitude of P1, the point P amplitude (distance from the origin) is multiplied by the average power ratio, and the result is taken as the amplitude of P1. P1 (3a, 3a) is then placed based on the phase and amplitude determined in this way. P2 through P16 and threshold values are then arranged, and received data determination performed, in the same way as in Embodiment 1.

Thus, according to this embodiment, even if common pilot and DSCH transmission power ratio information from the base station is not conveyed, the reception power of the common pilot and the reception power of the DSCH are measured in the mobile station apparatus, and the power ratio is then estimated, with the result that demodulation can be performed correctly even when amplitude modulation is used for a DSCH that does not have a known signal.

In this embodiment, the amplitude of P1 is determined by multiplying the average power ratio by the amplitude of point P at which a common pilot is placed, but it is also possible to divide the average power ratio by the amplitude of point P at which a common pilot is placed or to divide the common pilot amplitude by the average power ratio according to the method of calculating the power ratio information.

Also, in the above-described embodiments, only the case where a base station apparatus communicates with a mobile station apparatus has been described, but the present invention is not limited to this, and communication may also be carried out with a communication terminal apparatus other than a mobile station.

As described above, according to the present invention, it is possible to perform demodulation of amplitude modulation using a common pilot even when amplitude modulation is used on a DSCH that does not have a known signal.

### Industrial Applicability

The present invention is suitable for use in a communication terminal apparatus that performs M-ary quadrature amplitude modulation and a demodulation method whereby demodulation of an M-ary quadrature amplitude modulated radio signal is performed.

## Claims

1. A communication terminal apparatus comprising:
signal point arranging means for arranging signal points based on power ratio information which is a ratio of transmission power of a common known signal to transmission power of a signal included in a channel that does not have a known signal; and
demodulating means (303) for performing quadrature amplitude demodulation of the signal included in a channel that does not have a known signal, based on the signal points arranged by said signal point arranging means,
further comprising extracting means (119) for extracting the power ratio information included in signals transmitted from a base station apparatus, wherein said signal point arranging means is adapted to arrange the signal points based on the power ratio information extracted by said extracting means.

2. A communication terminal apparatus according to claim 1 comprising:
signal point arranging means for arranging signal points based on an average power ratio which is a ratio of an average reception power of a common known signal transmitted from a base station apparatus to an average value reception power of signals included in a channel that does not have a known signal.

3. A base station apparatus comprising:
modulating means (101) for switching a modulation method according to an estimated channel condition and modulating transmit data;
power ratio information calculating means (101) for calculating power ratio information which is a ratio of transmission power of a common known signal to
transmission power of a signal included in a channel that does not have a known signal; and
transmitting means (107) for transmitting calculated power ratio information to the communication terminal apparatus according to claim 1.

4. A demodulation method comprising the steps of:
arranging signal points based on power ratio information which is a ratio of transmission power of a common known signal to transmission power of a signal included in a channel that does not have a known signal; and
performing quadrature amplitude demodulation of the signal included in a channel that does not have a known signal, based on the arranged signal points, and
extracting the power ratio information included in signals transmitted from a base station apparatus,
wherein the signal points are arranged based on the power ratio information extracted.

## Patentansprüche

1. Kommunikations-Endgerätevorrichtung, die umfasst:
eine Signalpunkt-Anordnungseinrichtung zum Anordnen von Signal punkten basierend auf Leistungsverhältnis-Information, die ein Verhältnis der Sendeleistung eines gemeinsamen bekannten Signals zu der Sendeleistung eines Signals ist, das in einem Kanal, der kein bekanntes Signal besitzt, enthalten ist, und
eine Demodulationseinrichtung (303), die eine Quadratur-Amplitudendemodulation des Signals, das in einem Kanal, der kein bekanntes Signal besitzt, enthalten ist, basierend auf den durch die Signalpunkt-Anordnungseinrichtung angeordneten Signalpunkten durchführt,
weiter umfassend eine Extraktionseinrichtung (119) zum Extrahieren der Leistungsverhältnis-Information, die in von einer Basisstationsvorrichtung gesendeten Signalen enthalten ist, wobei die Signalpunkt-Anordnungseinrichtung die Signalpunkte basierend auf der durch die Extraktionseinrichtung extrahierten Leistungsverhältnis-Information anordnet.

2. Kommunikations-Endgerätevorrichtung nach Anspruch 1, die umfasst:
eine Signalpunkt-Anordnungseinrichtung zum Anordnen von Signalpunkten basierend auf einem mittleren Leistungsverhältnis, das ein Verhältnis einer mittleren Empfangsleistung eines von einer Basisstationsvorrichtung gesendeten, gemeinsamen bekannten Signals zu einer Mittelwert-Empfangsleistung von Signalen ist, die in einem Kanal, der kein bekanntes Signal besitzt, enthalten sind.

3. Basisstationsvorrichtung, die umfasst:
eine Modulationseinrichtung (101), die ein Modulationsverfahren entsprechend einem geschätzten Kanalzustand wechselt und Sendedaten moduliert;
eine Leistungsverhältnisinformations-Berechnungseinrichtung (101) zum Berechnen von Leistungsverhältnis-Information, die ein Verhältnis der Sendeleistung eines gemeinsamen bekannten Signals zu der Sendeleistung eines Signals ist, das in einem Kanal, der kein bekanntes Signal besitzt, enthalten ist, und
eine Sendeeinrichtung (107) zum Senden der berechneten Leistungsverhältnis-Information an die Kommunikations-Endgerätevorrichtung nach Anspruch 1.

4. Demodulationsverfahren, das die folgenden Schritte umfasst:
Anordnen von Signalpunkten basierend auf Leistungsverhältnis-Information, die ein Verhältnis der Sendeleistung eines gemeinsamen bekannten Signals zu der Sendeleistung eines Signals ist, das in einem Kanal, der kein bekanntes Signal besitzt, enthalten ist, und
Durchführen einer Quadratur-Amplitudendemodulation des Signals, das in einem Kanal, der kein bekanntes Signal besitzt, enthalten ist, basierend auf den angeordneten Signalpunkten, und
Extrahieren der Leistungsverhältnis-Information, die in Signalen enthalten ist, die von einer Basisstationsvorrichtung gesendet werden,
wobei die Signalpunkte basierend auf der extrahierten Leistungsverhältnis-Information angeordnet werden.

## Revendications

1. Un terminal de communication comprenant :
un moyen de configuration de points de signaux servant à configurer des points de signaux en fonction d'une information de rapport de puissance qui est un rapport de la puissance de transmission d'un signal connu commun sur la puissance de transmission d'un signal inclus dans une voie qui n'a pas de signal connu ; et
un moyen de démodulation (303) servant à exécuter une démodulation d'amplitude en quadrature du signal inclus dans une voie qui n'a pas de signal connu, en fonction des points de signaux configurés par ledit moyen de configuration de points de signaux,
comprenant en outre un moyen d'extraction (119) servant à extraire l'information de rapport de puissance incluse dans les signaux émis depuis un appareil de station de base, dans lequel ledit moyen de configuration de points de signaux est adapté pour configurer les points de signaux en fonction de l'information de rapport de puissance extraite par ledit moyen d'extraction.

2. Un terminal de communication selon la revendication 1 comprenant :
un moyen de configuration de points de signaux servant à configurer des points de signaux en fonction d'un rapport moyen de puissance qui est un rapport d'une puissance moyenne de réception d'un signal connu commun émis depuis un appareil de station de base sur une puissance de réception de valeur moyenne de signaux inclus dans une voie qui n'a pas de signal connu.

3. Un appareil de station de base comprenant :
un moyen de modulation (101) servant à commuter un procédé de modulation selon une condition de voie estimée et moduler des données d'émission ;
un moyen de calcul d'informations de rapport de puissance (101) servant à calculer une information de rapport de puissance qui est un rapport de la puissance de transmission d'un signal connu commun sur la puissance de transmission d'un signal inclus dans une voie qui n'a pas de signal connu ; et
un moyen d'émission (107) servant à transmettre l'information calculée de rapport de puissance au terminal de communication selon la revendication 1.

4. Un procédé de démodulation comprenant les étapes consistant à :
configurer des points de signaux en fonction d'une information de rapport de puissance qui est un rapport de la puissance de transmission d'un signal connu commun sur la puissance de transmission d'un signal inclus dans une voie qui n'a pas de signal connu ;
exécuter une démodulation d'amplitude en quadrature du signal inclus dans une voie qui n'a pas de signal connu, en fonction des points de signaux configurés ; et
extraire l'information de rapport de puissance incluse dans les signaux émis depuis un appareil de station de base,
les points de signaux étant configurés en fonction de l'information de rapport de puissance extraite.
